# EUROPÄISCHE PATENTSCHRIFT

(11) **EP 1 104 643 B1**
(45) Veröffentlichungstag und Bekanntmachung des Hinweises auf die Patenterteilung: **15.02.2006**
(21) Anmeldenummer: 99952370.7
(22) Anmeldetag: 12.08.1999
(51) Int. Cl.: H04Q 7/38

(54) **WECHSEL EINES GESTÖRTEN FUNKKANALS**
CHANGING A FAULTY RADIO CHANNEL
CHANGEMENT D'UN CANAL RADIO PERTURBE

(30) Priorität: 12.08.1998 DE 19836576
(43) Veröffentlichungstag der Anmeldung: 06.06.2001
(73) Patentinhaber: SIEMENS AKTIENGESELLSCHAFT, 80333 München (DE)
(72) Erfinder: KAMPERSCHROER, Erich, D-46499 Hamminkeln (DE); ALBERSMANN, Josef, D-48691 Vreden (DE); BOLINTH, Edgar, D-41189 Mönchengladbach (DE); SCHWARK, Uwe, D-46399 Bocholt (DE); SCHULZ, Egon, D-80993 München (DE); TROKS, Werner, D-49549 Ladbergen (DE); KAMMERLANDER, Karl, D-81543 München (DE)
(86) Internationale Anmeldenummer: PCT/DE1999/002518
(87) Internationale Veröffentlichungsnummer: WO 2000/010261

(56) Entgegenhaltungen:
- EP-A- 0 399 612
- EP-A- 0 490 509
- EP-A- 0 895 437

## Beschreibung

Die Erfindung betrifft ein Verfahren zum Wechseln von Funkkanälen einer Duplex-Funkverbindung in einem Funk-Kommunikationssystem, insbesondere in einem Mobilfunksystem, wobei die Duplex-Funkverbindung zwei physikalische Funkkanäle, einen ersten Funkkanal zur Übertragung von Kommunikationsinformation über eine Funkschnittstelle und einen zweiten Funkkanal zur Übertragung von Kommunikationsinformation in Gegenrichtung des ersten Funkkanals über die Funkschnittstelle, aufweist.

Es ist bekannt, in Funk-Kommunikationssystemen physikalische Kanäle zur Übertragung von Kommunikationsinformation zu nutzen. Durch Nutzung dieser physikalischen Kanäle wird die Kommunikationsinformation, insbesondere Sprechdaten oder Computerdaten, über eine Funkschnittstelle von einer ersten Funkstation zu einer zweite Funkstation übermittelt. Bei Duplex-Funkverbindungen wird auch in der Gegenrichtung über dieselbe Luftschnittstelle, d.h. in der Richtung von der zweiten Funkstation zu der ersten Funkstation Kommunikationsinformation übermittelt.

Parameter der physikalischen Kanäle sind beispielsweise in einem TDMA (Time Division Multiple Access)-Funk-Kommunikationssystem ein bestimmter Zeitschlitz, in einem FDMA (Frequency Dvision Multiple Access)-Funk-Kommunikationssystem eine bestimmte Trägerfrequenz, die bei der Übermittlung der Kommunikationsinformation genutzt wird, und in einem CDMA (Code Division Multiple Access)-Funk-Kommunikationssystem ein bestimmter Code, mit dem die Kommunikationsinformation zur Funkübermittlung codiert wird. Kombinationen der bekannten Vielfachzugriffsverfahren TDMA, FDMA und CDMA sind möglich. In einem kombinierten TDMA/FDMA-Funk-Kommunikationssystem beispielsweise ist daher ein physikalischer Funkkanal durch seinen Zeitschlitz und seine Funkfrequenz bzw. Trägerfrequenz definiert.

In bekannten Mobilfunksystemen, insbesondere in dem GSM (Global System for Mobile Telecommunication), wird die Vergabe der Funkkanäle, über die zwischen einer bestimmten Basisstation und einer bestimmten Mobilstation Kommunikationsinformation übertragen werden kann, zentral durch eine Koordinationseinheit vergeben. Die Koordinationseinheit steuert die einzelnen Steuereinheiten der in dem GSM betriebenen Basisstationen an und weist ihnen die Funkkanäle zu.

Bekannt sind aber auch Funk-Kommunikationssysteme, die im sogenannten unkoordinierten Betrieb arbeiten. In solchen Systemen werden die Funkkanäle nicht zentral für das gesamte System vergeben, sondern suchen sich vielmehr die an einer Funkverbindung beteiligten Funkstationen die Funkkanäle selbst aus einem vorhandenen Pool von verfügbaren Funkkanälen aus. Ein Beispiel für eine Funkstation, die im unkoordinierten Betrieb arbeitet, ist die Mobilstation eines Mobilfunksystems nach dem DECT-Standard.

Wie bereits vorstehend erwähnt, werden in bekannten Funk-Kommunikationssystemen, insbesondere in einem GSM, einem System nach DECT-Standard oder in einem zukünftigen UMTS (Universal Mobile Telecommunication System), Duplex-Funkverbindungen aufgebaut, um bidirektional Daten, Sprachinformation oder Kommunikationsinformation anderer Dienste über eine Funkschnittstelle zu übertragen. Bekannt sind insbesondere das TDD (Time Division Duplex)-Verfahren, bei dem ein erster Funkkanal und ein zweiter Funkkanal derselben Duplex-Funkverbindung verschiedene Zeitschlitze derselben Trägerfrequenz nutzen. Hierbei stellt der erste Funkkanal die Funkverbindung in der einen Richtung dar und der zweite Funkkanal die Funkverbindung in der Gegenrichtung dar. Weiterhin ist das FDD (Frequency Division Duplex)-Verfahren bekannt, bei dem der erste Funkkanal der Duplex-Funkverbindung eine erste Funkfrequenz und der zweite Funkkanal der Duplex-Funkverbindung eine zweite, andere Funkfrequenz nutzt.

Bei den Duplex-Funkverbindungen bekannter Funk-Kommunikationssysteme besteht eine feste Kopplung zwischen jeweils einem Paar der zur Verfügung stehenden physikalischen Funkkanäle. Beispielsweise stehen in einem DECT-Mobilfunksystem jeweils 24 Zeitschlitze von 10 Trägerfrequenzen für die physikalischen Funkkanäle zur Verfügung. Für die Downlink-Funkverbindung zwischen einer Basisstation und einer Mobilstation sind dabei jeweils die ersten 12 Zeitschlitze der Trägerfrequenzen reserviert. Die Zeitschlitze 13 bis 24 der Trägerfrequenzen sind für die Uplink-Funkverbindungen in der Gegenrichtung von der Mobilstation zu der Basisstation reserviert. Die feste Kopplung bei jeweils einem Paar von Funkkanälen läßt aber nicht beliebige Kombinationen eines Downlink-Funkkanals und eines Uplink-Funkkanals bei einer Duplex-Funkverbindung zu, sondern bestimmt, daß jedem Downlink-Funkkanal ein bestimmter Uplink-Funkkanal fest zugeordnet ist. Im Fall des DECT-Systems nutzen jeweils die beiden miteinander gekoppelten Funkkanäle dieselbe Trägerfrequenz, wobei der Downlink-Funkkanal und der Uplink-Funkkanal außerdem jeweils den Zeitschlitz mit derselben Ordnungsnummer von den zur Verfügung stehenden 12 Zeitschlitzen nutzen, die den Downlink-Funkkanälen und den Uplink-Funkkanälen jeweils zugeordnet sind. Beispielsweise ist so der erste Zeitschlitz einer Trägerfrequenz fest mit dem 13. Zeitschlitz verbunden, der zweite Zeitschlitz fest mit dem 14. Zeitschlitz verbunden, und so weiter.

Auch bei dem GSM besteht eine feste Kopplung zwischen dem Uplink-Funkkanal und Downlink-Funkkanal einer Duplex-Funkverbindung. Im Unterschied zu DECT-Systemen nutzen die miteinander gekoppelten Funkkanäle unterschiedliche Funkfrequenzen. Jedoch ist ein Paar von miteinander gekoppelten Funkkanälen in den beiden genutzten Funkfrequenzen jeweils der Zeitschlitz mit derselben Ordnungsnummer zugeordnet. Es werden also beispielsweise von einer Duplex-Funkverbindung jeweils der 1. Zeitschlitz von zwei Funkfrequenzen, oder der 2. Zeitschlitz von zwei Funkfrequenzen und so weiter genutzt.

Während des Betriebs von bestehenden Duplex-Funkverbindungen können beispielsweise aufgrund von Interferenzen, Mehrwegeausbreitung, Fading und/oder Schwund von Kommunikationssignalen Störungen auftreten, die zu einem Verlust der übermittelten Kommunikationsinformation führen können. Zur Vermeidung weiterer Störungen bzw. zur Behebung der Störung der Duplex-Funkverbindung ist es üblich, die physikalischen Funkkanäle der Duplex-Funkverbindung zu wechseln, und zwar sowohl den Funkkanal für die eine Übertragungsrichtung als auch den Funkkanal für die Gegenrichtung.

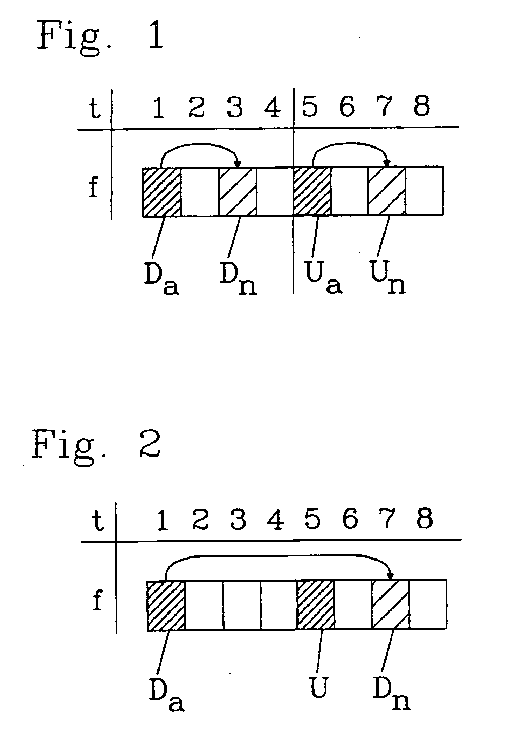

Anhand von Fig. 1 der beigefügten Zeichnung wird dieser Sachverhalt näher erläutert. Fig. 1 zeigt insgesamt acht physikalische Funkkanäle, die in einem Funk-Kommunikationssystem mit TDMA-Vielfachzugriffskomponenten vorhanden sind. Die einzelnen physikalischen Funkkanäle sind durch die gemeinsame Trägerfrequenz f und durch jeweils einen der acht Zeitschlitze t1, t2 ... t8 definiert. Vor dem Auftreten einer Störung werden von einer bestehenden Duplex-Funkverbindung in Downlink-Richtung der Funkkanal Dₐ mit der Frequenz-/Zeitschlitzkombination f/t1 und in Uplink-Richtung der Funkkanal Uₐ mit der Frequenz-/Zeitschlitzkombination f/t5 genutzt. Nun tritt eine Störung, beispielsweise des Downlink-Funkkanals Dₐ auf, den die Mobilstation aufgrund einer unzulässig hohen Bitfehlerrate feststellt. Daraufhin ermittelt die Basisstation einen neuen zur Verfügung stehenden Downlink-Funkkanal, indem sie auf eine Liste der zur Verfügung stehenden Funkkanäle zugreift, in der für jeden Funkkanal eingetragen ist, ob der Funkkanal ebenfalls gestört oder anderweitig genutzt ist.

Auf diese Weise ermittelt die Mobilstation den Funkkanal mit der Frequenz-/Zeitschlitzkombination f/t3 als möglichen neuen Downlink-Funkkanal Dₙ und teilt der Basisstation mit, daß ein Wechsel auf diesen Funkkanal eingeleitet wird bzw. daß die Basisstation nach dem Wechsel auf dem Funkkanal Dₙ senden soll. Gemäß definierter Protokolle wird daraufhin sowohl der Wechsel des Downlink-Funkkanals von dem Funkkanal Dₐ zu dem Funkkanal Dₙ als auch der Wechsel des Uplink-Funkkanals von dem Funkkanal Uₐ zu dem Funkkanal Uₙ durchgeführt. Der vertikale Strich zwischen den Funkkanälen mit den Zeitschlitzen t1 bis t4 und zwischen den Funkkanälen mit den Zeitschlitzen t5 bis t8 deutet an, daß es sich bei dem betrachteten Funk-Kommunikationssystem um ein System handelt, in dem die ersten vier Funkkanäle der Trägerfrequenz f ausschließlich für Downlink-Verbindungen und die zweiten vier Funkkanäle ausschließlich für Uplink-Funkverbindungen genutzt werden.

Aus der EP 0 399 612 A2 ist ein Verfahren und ein System zur Datenübertragung über einen TDD-Kanal bekannt, bei dem mindestens ein aus zwei nicht-benachbarten Zeitschlitzen gebildeter bidirektionaler (Duplex) Sprachkanal für eine Datenübertragung zwischen einer ersten und einer zweiten Funksende-/Funkempfangsstation zur Verfügung gestellt wird, wobei bei Verwendung von zwei oder mehr Duplex-Sprachkanälen - falls in einer Übertragungsrichtung mehr Datenpakete zu übertragen sind als in der Gegenrichtung - ungenutzte, der Gegenrichtung zugeordnete, Zeitschlitze der Duplex-Sprachkanäle freigegeben und für die Übertragung der Datenpakete in Übertragungsrichtung zur Verfügung gestellt werden.

Aus der nachveröffentlichten EP 0 895 437 A2 ist ein Telekommunikationssystem bekannt, bei dem für die drahtlose FDMA/TDMA/TDD-basierte Telekommunikation zwischen einer Basisstation und einem Mobilteil mehrere parallele, vorzugsweise zwei, Duplex-Funkverbindungen mit jeweils einem Downlink-Funkkanal (erster Funkkanal) und einem Uplink-Funkkanal (zweiter Funkkanal) verwendet werden. Ist nun eine der Duplex-Funkverbindungen gestört, so wird zur Beseitigung dieser Störung vorgeschlagen, entweder gemäß Figur 6 für sämtliche Downlink- und Uplink-Funkkanäle der Duplex-Funkverbindungen sowohl Zeitschlitz als auch Trägerfrequenz oder gemäß Figur 12 nur für den Downlink- und Uplink-Funkkanal der gestörten Duplex-Funkverbindung jeweils den Zeitschlitz unter Beibehaltung der Trägerfrequenz oder gemäß Figur 17 nur für den Downlink- und Uplink-Funkkanal der gestörten Duplex-Funkverbindung jeweils die Trägerfrequenz unter Beibehaltung des Zeitschlitzes zu wechseln.

Der vorliegenden Erfindung liegt die Aufgabe zugrunde, ein Verfahren zum Wechseln eines Funkkanals der eingangs genannten Art anzugeben, bei dem das Frequenzspektrum der zur Verfügung stehen Funkkanäle möglichst gut genutzt werden kann und bei dem der Wechsel in möglichst kurzer Zeit durchgeführt werden kann.

Die Aufgabe wird durch ein Verfahren mit den Merkmalen des Anspruchs 1 gelöst. Weiterbildungen sind Gegenstand der abhängigen Ansprüche.

Ein Kerngedanke der vorliegenden Erfindung besteht darin, daß bei einer Störung der bestehenden Duplex-Funkverbindung nur der gestörte erste oder der gestörte zweite Funkkanal gewechselt wird. Diesem Kerngedanken liegt die Erkenntnis zugrunde, daß in vielen Fällen bei einer Störung der Duplex-Funkverbindung nur einer der momentan genutzten Funkkanäle gestört ist. Um die Störung möglichst schnell zu beheben, wird daher nur der gestörte Funkkanal gewechselt. Mit dem Wechsel nur eines Funkkanals ist in der Regel ein wesentlich geringerer Austausch von Signalisierungsinformation über die Funkschnittstelle verbunden als bei einem Wechsel von mehreren Funkkanälen.

Eine Funkverbindung kann aus einer erfindungsgemäßen Duplex-Funkverbindungen und weiteren Funkkanälen bestehen, sodaß nicht nur jeweils ein Funkkanal für die beiden Übertragungsrichtungen genutzt wird, sondern beispielsweise für die Übertragung von Computerdaten in der Downlink-Richtung mehrere Funkkanäle benutzt werden. Weiterhin kann die Anzahl der in der einen Richtung genutzten Funkkanäle sich von der Anzahl der in der Gegenrichtung genutzten Funkkanäle unterscheiden.

Das erfindungsgemäße Verfahren wird bei einer Reihe von unterschiedlichen Vielfachzugriffsverfahren bzw. Kombinationen dieser Vielfachzugriffsverfahren in vorteilhafter Weise genutzt.

Bei einer ersten Ausgestaltung weist das Funk-Kommunikationssystem eine TDMA-Vielfachzugriffskomponente auf und wird lediglich der Zeitschlitz des gestörten ersten oder des gestörten zweiten Funkkanals gewechselt.

Bei einer anderen Ausgestaltung weist das Funk-Kommunikationssystem eine FDMA-Vielfachzugriffskomponente auf und wird lediglich die Trägerfrequenz des gestörten ersten oder des gestörten zweiten Funkkanals gewechselt.

Besonders vorteilhaft ist das erfindungsgemäße Verfahren dann einsetzbar, wenn das Funk-Kommunikationssystem sowohl eine TDMA-, als auch eine FDMA-Vielfachzugriffskomponente aufweist und wenn sowohl die Trägerfrequenz als auch der Zeitschlitz des gestörten ersten oder des gestörten zweiten Funkkanals gewechselt werden kann. Damit steht bei dem Wechsel des gestörten Funkkanals eine Vielzahl von vorhandenen Funkkanälen des Funk-Kommunikationssystems bei der Auswahl eines neuen Funkkanals zur Verfügung.

Bereits dann, wenn das Funk-Kommunikationssystem Funkkanäle nur entweder als ersten Funkkanal für eine Übertragungsrichtung oder als zweiten Funkkanal für die Gegenrichtung anbietet, werden die zur Verfügung stehenden Funkkanäle effektiver als bei bekannten Funk-Kommunikationssystemen mit fester Kopplung von Duplex-Funkkanälen genutzt.

Es wird jedoch vorgeschlagen, keine solche Trennung zwischen ersten und zweiten Funkkanälen vorzunehmen, sondern nur einen einzigen Pool von zur Verfügung stehenden physikalischen Funkkanälen zu bilden, aus dem bei Bedarf ein Funkkanal entnommen werden kann, der dann entweder als erster oder zweiter Funkkanal genutzt wird.

Wie sofort ersichtlich ist, ist die spektrale Effizienz, d.h. die Effizienz der Nutzung des zur Verfügung stehenden Frequenzspektrums, in diesem Fall wesentlich größer als bei bekannten Verfahren, die aufgrund der Kopplung der Duplex-Funkkanäle nur einen gleichzeitigen Wechsel beider Kanäle zulassen, so daß auch ein u.U. ungestörter Funkkanal gewechselt werden muß und nicht weiter genutzt werden kann.

Bei einer Weiterbildung weist das Funk-Kommunikationssystem eine CDMA-Vielfachzugriffskomponente auf und wird der Übertragungscode des gestörten ersten oder des gestörten zweiten Funkkanals gewechselt.

Die Erfindung wird nun anhand eines Ausführungsbeispiels näher erläutert. Dabei wird Bezug auf die beigefügte Zeichnung genommen. Die Erfindung ist jedoch nicht auf dieses Ausführungsbeispiel beschränkt. Die einzelnen Figuren der Zeichnung zeigen:
- Fig. 1: einen Wechsel von Funkkanälen nach einem bekannten Verfahren, wie bereits vorstehend erläutert, und
- Fig. 2: ein Ausführungsbeispiel nach dem erfindungsgemäßen Verfahren.

Fig. 2 zeigt ähnlich wie bereits anhand von Fig. 1 erläutert ein Funk-Kommunikationssystem mit einer TDMA-Vielfachzugriffskomponente. Dargestellt sind acht Zeitschlitze t1, t2...t8 einer Trägerfrequenz f bzw. die so definierten physikalischen Funkkanäle. Im Unterschied zu dem anhand von Fig. 1 beschriebenen Funk-Kommunikationssystem besteht aber keine feste Kopplung zwischen den bei ein und derselben Duplex-Funkverbindung nutzbaren Funkkanälen. Vielmehr bilden alle verfügbaren physikalischen Funkkanäle des Systems einen gemeinsamen Pool von Funkkanälen, aus dem bei Bedarf ein Funkkanal entnommen werden kann und bei einer Funkverbindung genutzt werden kann.

Somit ist es beispielsweise auch möglich, nicht nur Funkkanäle für Duplex-Funkverbindungen aus dem Pool zu entnehmen, sondern auch für unidirektionale Verbindungen, beispielsweise für die Übermittlung von Signalisierungsinformation von einer Basisstation zu einer Vielzahl von Mobilstationen. Der Begriff "unidirektional" ist hierbei nicht dahingehend zu verstehen, daß die Information nur in eine Raumrichtung übertragen werden soll, sondern bei Betrachtung einer oder mehrerer Funkschnittstellen nur in jeweils eine der beiden Übertragungsrichtungen der jeweiligen Funkschnittstelle.

Bei dem in Fig. 2 dargestellten Fall besteht anfangs eine Duplex-Funkverbindung eines Mobilfunksystems, wobei die Downlink-Verbindung über den Funkkanal Dₐ und die Uplink-Funkverbindung über den Funkkanal U hergestellt ist. Nun tritt eine Störung des Funkkanals Dₐ, beispielsweise durch Mehrwegeausbreitung auf. Die Mobilstation erkennt die Störung und sucht aus dem Pool von zur Verfügung stehenden Funkkanälen den neuen Downlink-Funkkanal Dₙ aus. Sie teilt den beabsichtigten Wechsel der Basisstation mit, die im Laufe der daraufhin ausgelösten Wechselprozedur das Senden von Kommunikationsinformation auf den entsprechenden, neuen Zeitschlitz t7 einstellt.

Wie bereits betont, ist die Erfindung nicht auf das anhand von Fig. 2 erläuterte Ausführungsbeispiel beschränkt. Vielmehr wird das erfindungsgemäße Verfahren mit Vorteil insbesondere bei der Möglichkeit eines Wechsels sowohl der Funkfrequenz als auch des Zeitschlitzes des gestörten Funkkanals eingesetzt. Allgemein lassen sich die Vorteile des erfindungsgemäßen Verfahrens wie folgt aufzählen, wobei die Aufzählung jedoch nicht abgeschlossen ist:
- Sind nicht sowohl der erste als auch der zweite Funkkanal einer bestehenden Duplex-Funkverbindung gestört, müssen nicht der erste und der zweite Funkkanal gewechselt werden. Der nicht gestörte Funkkanal bzw. die nicht gestörten Funkkanäle werden daher weiterhin genutzt, so daß gegenüber den bekannten Verfahren das zur Verfügung stehende Frequenzspektrum effizienter genutzt wird.
- Durch jeden Wechsel eines Funkkanals können Interferenzen auf anderen Funkverbindungen entstehen, indem sich die auf den neuen Funkkanal abgestrahlten elektromagnetischen Wellen störend auf anderen, u.U. räumlich weit entfernten Funkverbindungen auswirken. Damit nimmt durch die geringere Kanalwechselrate bei dem erfindungsgemäßen Verfahren auch die Wahrscheinlichkeit einer Störung anderer Funkverbindungen ab, und zwar überproportional, da eine durch einen Kanalwechsel bewirkte Störung und der dadurch ausgelöste weitere Kanalwechsel wiederum mit einer bestimmten Wahrscheinlichkeit eine weitere Störung einer Funkverbindung nach sich zieht.
- Der Wechsel nur eines Funkkanals erfordert geringeren zeitlichen Aufwand bei der Suche nach einem neuen, ungestörten Funkkanal und bei der Übermittlung und Auswertung von Signalisierungsinformation, die zwischen beteiligten Funkstationen übertragen wird.
- Wegen des geringeren Arbeitsaufwands, der in den beteiligten Funkstationen geleistet werden muß, können auch die hardwaretechnischen und softwaretechnischen Ressourcen der Funkstationen entsprechend geringer dimensioniert werden.

Das erfindungsgemäße Verfahren ist insbesondere für den sogenannten unkoordinierten Betrieb in einem zukünftigen Mobilfunksystem, beispielsweise dem UMTS (Universal Mobile Telecommunication System) im TDD (Time Division Duplex)-Betrieb einsetzbar. Vorteilhaft kann die Erfindung aber auch bei anderen System eingesetzt werden, beispielsweise bei Systemen, die gemäß dem DECT-Standard betrieben werden, indem die feste Kopplung jeweils eines Paares von physikalischen Funkkanälen aufgegeben wird und bei einer gestörten Duplex-Funkverbindung nur der gestörte erste oder der gestörte zweite Funkkanal gewechselt wird.

## Patentansprüche

1. Verfahren zum Wechseln von Funkkanälen einer Duplex-Funkverbindung in einem Funk-Kommunikationssystem, insbesondere in einem Mobilfunksystem, mit folgenden Merkmalen:
(i) zwei physikalische Funkkanäle (Dₐ, U), ein erster physikalischer Funkkanal (Dₐ) zur Übertragung von Kommunikationsinformation über eine Funkschnittstelle und ein zweiter physikalischer Funkkanal (U) zur Übertragung von Kommunikationsinformation in Gegenrichtung des ersten physikalischen Funkkanals über die Funkschnittstelle, bilden eine Duplex-Funkverbindung,
(ii) bei einer Störung der Duplex-Funkverbindung, bei der einer der beiden physikalischen Funkkanäle (Dₐ, U) gestört ist, wird nur der gestörte erste physikalische Funkkanal (Dₐ) oder nur der gestörte zweite physikalische Funkkanal (U) gewechselt, wobei der jeweils ungestörte physikalische Funkkanal der Duplex-Funkverbindung beibehalten wird.

2. Verfahren nach Anspruch 1,
wobei das Funk-Kommunikationssystem eine TDMA-Vielfachzugriffskomponente aufweist und wobei lediglich der Zeitschlitz (t1) des gestörten ersten (Dₐ) oder des gestörten zweiten Funkkanals gewechselt wird.

3. Verfahren nach Anspruch 1,
wobei das Funk-Kommunikationssystem eine FDMA-Vielfachzugriffskomponente aufweist und wobei lediglich die Trägerfrequenz des gestörten ersten oder des gestörten Funkkanals gewechselt wird.

4. Verfahren nach Anspruch 1,
wobei das Funk-Kommunikationssystem sowohl eine TDMA- als auch eine FDMA-Vielfachzugriffskomponente aufweist und wobei sowohl der Zeitschlitz als auch die Trägerfrequenz des gestörten ersten oder des gestörten zweiten Funkkanals gewechselt wird.

5. Verfahren nach einem der Ansprüche 1 bis 4,
wobei das Funk-Kommunikationssystem eine CDMA-Vielfachzugriffskomponente aufweist und wobei der Übertragungscode des gestörten ersten oder des gestörten zweiten Funkkanals gewechselt wird.

6. Verfahren nach einem der Ansprüche 1 bis 5,
wobei jeder zur Verfügung stehende Funkkanal (Dₐ, Dₙ, U) des Funk-Kommunikationssystems sowohl als erster Funkkanal (Dₐ, Dₙ) als auch als zweiter Funkkanal (U) nutzbar ist.

## Revendications

1. Procédé pour le changement de canaux radio d'une liaison radio duplex dans un système de communication radio, en particulier dans un système de téléphonie mobile, présentant les caractéristiques suivantes :
(i) deux canaux radio physiques (Dₐ, U), un premier canal radio physique (Dₐ) pour la transmission d'informations de communication via une interface radio et un second canal radio physique (U) pour la transmission d'informations de communication dans le sens opposé au premier canal radio physique via l'interface radio, forment une liaison radio,
(ii) en cas de perturbation de la liaison radio duplex, au cours de laquelle l'un des deux canaux radio physiques (Dₐ, U) est perturbé, seul le premier canal radio physique (Dₐ) perturbé ou seul le second canal radio physique (U) perturbé est changé, le canal radio physique non perturbé respectivement de la liaison radio duplex étant conservé.

2. Procédé selon la revendication 1,
dans lequel le système de communication radio présente un composant à accès multiple TDMA et uniquement le créneau temporel (t1) du premier (Dₐ) ou du second canal radio perturbé est changé.

3. Procédé selon la revendication 1,
dans lequel le système de communication radio comporte un composant à accès multiple FDMA et uniquement la fréquence porteuse du premier ou du second canal radio perturbé est changée.

4. Procédé selon la revendication 1,
dans lequel le système de communication radio comporte à la fois un composant à accès multiple TDMA et FDMA et dans lequel tant le créneau temporel que la fréquence porteuse du premier ou du second canal radio perturbé sont changés.

5. Procédé selon l'une des revendications 1 à 4,
dans lequel le système de communication radio comporte un composant à accès multiple CDMA et dans lequel le code de transmission du premier ou du second canal radio perturbé est changé.

6. Procédé selon l'une des revendications 1 à 5,
dans lequel chaque canal radio disponible (Dₐ, Dₙ, U) du système de communication radio est utilisable tant comme premier canal radio (Dₐ, Dₙ) que comme second canal radio (U).

## Claims

1. Method for changing radio channels of a duplex radio link in a radio communication system, in particular in a mobile radio system, having the following features:
(i) two physical radio channels (Dₐ, U), a first radio channel (Dₐ) for transmitting communication information over a radio interface and a second physical radio channel (U) for transmitting communication information in the opposite direction to the first physical radio channel over the radio interface, form a duplex radio link,
(ii) in the event of a fault on the duplex radio link in which one of the two physical radio channels (Dₐ, U) is faulty, only the faulty first physical radio channel (Dₐ) or only the faulty second physical radio channel (U) is changed, and the respectively non-faulty physical radio channel of the duplex radio link is retained.

2. Method according to Claim 1,
where the radio communication system has a TDMA multiple access component, and where only the time slot (t1) of the faulty first radio channel (Dₐ) or of the faulty second radio channel is changed.

3. Method according to Claim 1,
where the radio communication system has an FDMA multiple access component, and where only the carrier frequency of the faulty first radio channel or of the faulty second radio channel is changed.

4. Method according to Claim 1,
where the radio communication system has both a TDMA multiple access component and an FDMA multiple access component, and where both the time slot and the carrier frequency of the faulty first radio channel or of the faulty second radio channel are changed.

5. Method according to one of Claims 1 to 4,
where the radio communication system has a CDMA multiple access component, and where the transmission code of the faulty first radio channel or of the faulty second radio channel is changed.

6. Method according to one of Claims 1 to 5,
where each available radio channel (Dₐ, Dₙ, U) of the radio communication system can be used both as a first radio channel (Dₐ, Dₙ) and as a second radio channel (U).
